# EUROPEAN PATENT SPECIFICATION

(11) **EP 1 174 023 B1**
(45) Date of publication and mention of the grant of the patent: **17.09.2003**
(21) Application number: 01500187.8
(22) Date of filing: 10.07.2001
(51) Int. Cl.: A01K 15/02, A01K 27/00

(54) **Device to assist newborn cattle to walk**
Gehhilfe für neugeborenes Vieh
Appareil d'aide à la marche pour le bétail nouveau-né

(30) Priority: 19.07.2000 ES 200001937 U
(43) Date of publication of application: 23.01.2002
(73) Proprietor: Sala Prat, Josep, 25270 Sant Guim de Freixenet (Lerida) (ES); Marce Anglarill, Nuria, 25270 Sant Guim de Freixenet (Lerida) (ES)
(72) Inventor: Sala Prat, Josep, 25270 Sant Guim de Freixenet (Lerida) (ES); Marce Anglarill, Nuria, 25270 Sant Guim de Freixenet (Lerida) (ES)
(74) Representative: Isern Jara, Nuria

(56) References cited:
- US-A- 5 140 947
- US-A- 5 845 606

## Description

### Field of the invention

The present invention relates to a device to assist newborn cattle to walk.

Specifically, the invention refers to a harness especially adapted to be applied to four-legged heads of cattle which are unable to walk just after being born. The device is applied and fastened to their hind legs, which are drawn backwards, thus allowing the newborn calf to stand up on all four legs.

Document US-A-5845606 discloses a pet harness enabling a sick, injured or otherwise disabled animal to be assisted in standing up and walking.

### Background of the invention

It is well known that the survival possibili-ties for cattle or four-legged animals, especially in large broods, depends on being able to obtain a proper feeding.

A certain number of newborn heads of cattle are unable to stand up on their hind legs and cannot walk. They place their front legs on the ground, but they sit down with their hind legs sprawling forwards. Consequently, they can not walk and approach their mother's teats.

The halves that can progress towards their mother take the lead over the others, and the latter eventually die due to lack of food.

This fact leads to decreased profits on farms and stock ranches, since part of the brood is lost.

In a pig litter, for instance, newborn pig-lets that can stand properly after being born are able to walk and approach the sow. Therefore, they are fed and can grow up. Young pigs that can not stand up correctly are disregarded. Therefore, they are not fed and they may even die due to malnutrition.

### Brief description of the invention

The device to assist newborn cattle to walk defining the subject matter of this patent application is defined in claim 1. It comprises a harness easy to apply on newborn four-legged animals and allowing them to stand up on their four legs and therefore to walk.

The harness comprises an adhesive strap that has a narrow tape on the front end devised to fasten around the animal's neck. The strap is fixed to the animal's back by its adhesive surface, especially on the rear half, providing a fastening end for the elements attached to the hind legs. The back strap is equipped with two elastic bands, each of which has a transverse band to be attached to one of the ankles of the animal. Each of the transverse bands is preferably formed by an adhesive strap, adapted to be fastened around an ankle.

The transverse bands pull the ankles due to the resilient elements coming from the animal's back. These elements pull the ankles backwards, giving the hind legs strength and preventing the legs from bending forwards.

The narrow tape around the animal's neck that is connected to the front end of the device helps position of the device. It is of a bright colour in order to easily identify the animals to which the device has been attached.

After it is attached to a calf, the device brings about a retraction (backwards) force of the hind legs of the calf, encouraging them to adopt a stable position corresponding to the natural position of the animal for walking. As above mentioned, as the animal adopts this position on its hind legs, it is able to stand up and walk, thus assuring its mobility.

Mounting the device on a calf is easy: first, both transverse straps are fixed to the ankles of the hind legs, wrapping the adhesive bands around the legs and ensuring that the elastic bands rest and are attached to the rear of the legs and thighs. The hind legs are then oriented backwards and the back strap is adhered to the animal's back. The entire device is designed so that there is minimal stress on the elastic bands. Finally, the front tape is put around the animal's neck. The free end of the tape is attached to an adhesive area in the front of the band, and the rest of the tape is cut and discarded.

The animal wearing the device stretches its hind legs in a vertical position. In this process, the elastic band connecting the back strap and the bands retaining the ankles are tightened on each leg until a balance is reached with the tendency of the leg to bend forward. This balance is preferably attained so that the angle defined by the legs with the body of the animal is as similar as possible to the normal angle adopted by the animal when standing on all four legs.

The invention offers many advantages. First, it gives the newborn animals not able to move on their own mobility, especially those unable to get up and start walking. This prevents from dying due to lack of feed. Piglets to which the device has been attached can approach the sow and get fed with her milk. Secondly, there are also advantages for the cattle breeder, as he is assured that a high percentage of the brood will survive.

In order that the present invention may be well understood, there will now be described a preferred embodiment thereof, given by way of non limiting example, reference being made to the accompanying drawings.

### Brief description of the drawings

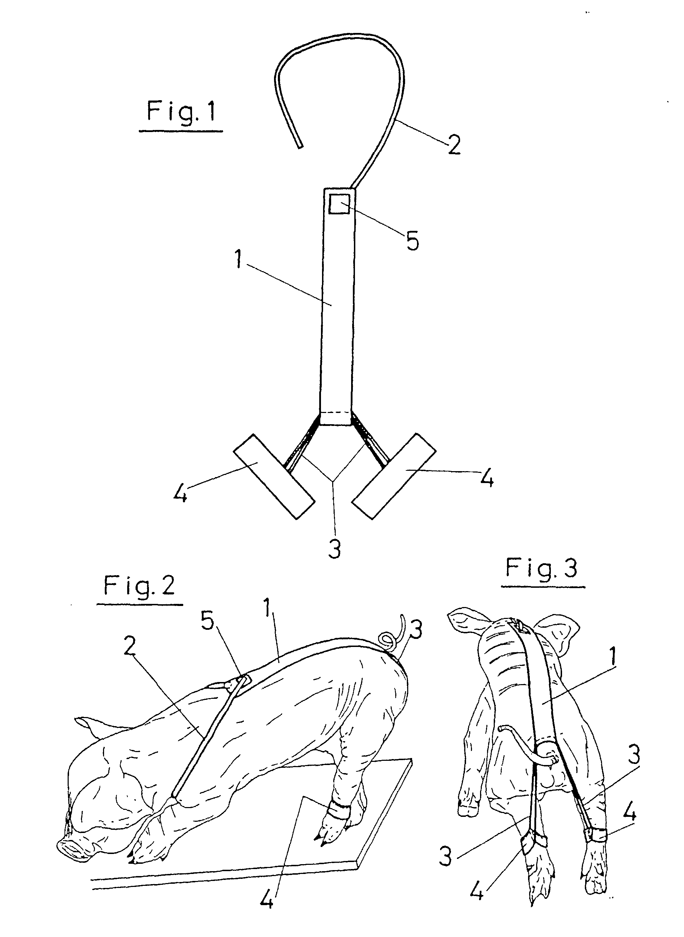

Figure 1 is an illustration of the device as a whole.
Figure 2 shows a newborn piglet wearing the device assisting it to walk.
Figure 3 shows a rear view of the piglet with the device.

### Description of a preferred embodiment

The above mentioned drawings and the numbering on them show a preferred, but not limiting embodi- ment of the invention.

The novel device consists of a band or wide tape (1) with one adhesive side. On one end there is a narrow band or tape (2), of a bright colour, fastened on one end and free on the other end.

On the same end, the wide band (1) bears a small adhesive area (5) in the side opposite to the adhesive side.

On the other end, the wide band (1) has two elastic strips (3) that are tightened on the animal's hind legs. Each of the strips (3) is connected to a transverse adhesive band (4) for the animal's ankle.

## Claims

1. A device to assist newborn calves to walk, designed so that they can stand up on their hind legs and making possible their mobility, comprising a long, wide band (1) equipped with one adhesive side to be attached to the back of the animal, with the front end of the band (1) including a bright, narrow tape (2) to be attached around the animal's neck, and the rear end of the band (1) extending in two elastic strips (3) connected to transverse, adhesive bands (4) to be attached around the animal's ankles,
whereby the narrow tape (2), after sur-rounding the animal's neck, is retained in an adhesive area (5) provided on the front end of the band (1).

## Patentansprüche

1. Gehhilfe für neugeborene Kälber und Schweine, die derart entworfen ist, dass die Tiere mit ihren Hinterbeinen aufstehen und diese bewegen können, bestehend aus einem langen, breiten Riemen (1) mit einer haftenden Seite zur Befestigung am Rücken des Tieres, einem am vorderen Ende des Riemens (1) befestigten schmalen, glänzenden Band (2), das um den Hals des Tieres gelegt wird, und zwei vom hinteren Ende des Riemens (1) ausgehende elastische Bänder (3), die mit querliegenden Klebebändern zur Befestigung an den Fesseln des Tieres verbunden sind, wobei das schmale Band (2), nachdem es um den Tierhals gelegt wurde, an einer am vorderen Ende des Riemens (1) befindlichen Haftzone (5) festgehalten wird.

## Revendications

1. Dispositif pour aider à marcher le bétail nouveau-né, conçu de manière que les têtes de bétail puissent se dresser sur leurs pattes arrière, leur permettant ainsi de se mouvoir, comprenant une bande longue et large (1), pourvue d'une face adhésive qui se fixe sur la partie dorsale de l'animal, l'extrémité avant de la bande (1) incluant un ruban étroit et brillant (2) qui se fixe au cou de l'animal, l'extrémité arrière de cette bande (1) étant prolongée par deux éléments élastiques (3) reliés à des bandes adhésives transversales qui se fixent autour des chevilles des animaux de manière que le ruban étroit (2), une fois passé autour du cou de l'animal, est retenu par un point adhésif (5) disposé à l'extrémité avant de la bande (1) .
